# EUROPEAN PATENT SPECIFICATION

(11) **EP 0 491 357 B1**
(45) Date of publication and mention of the grant of the patent: **07.03.2001**
(21) Application number: 91121613.3
(22) Date of filing: 17.12.1991
(51) Int. Cl.: C09D 127/22, C08L 27/22, C08F 8/30, C08F 8/42

(54) **Coating compositions**
Beschichtungszusammensetzungen
Compositions de revêtement

(30) Priority: 17.12.1990 JP 41106690; 25.12.1990 JP 41285990; 25.12.1990 JP 41286090
(43) Date of publication of application: 24.06.1992
(73) Proprietor: DAINICHISEIKA COLOR & CHEMICALS MFG. CO. LTD., Chuo-ku Tokyo 103 (JP); UKIMA COLOUR & CHEMICALS MFG. CO. LTD., Chuo-ku Tokyo (JP)
(72) Inventor: Hanada, Kazuyuki, Chuo-ku, Tokyo (JP); Hirose, Setsuo, Chuo-ku, Tokyo (JP); Kuriyama, Katsumi, Chuo-ku, Tokyo (JP)
(74) Representative: Wächtershäuser, Günter, Prof. Dr.

(56) References cited:
- EP-A- 0 267 698
- EP-A- 0 348 946
- DATABASE WPI Week 8811, Derwent Publications Ltd., London, GB; Class A82, AN 1988-075380 & JP 63 030 571 A (SHOWA HIGH POLYMER KK) 09 February 1988
- DATABASE WPI Week 9102, Derwent Publications Ltd., London, GB; Class A82, AN 1991-012455 & JP 2 286 772 A (DAINICHISEIKA COLOR & CHEM MFG) 26 November 1990
- PATENT ABSTRACTS OF JAPAN vol. 015, no. 060 (C-0805) 13 February 1991 & JP 02 286 760 A (DAINICHISEIKA COLOR & CHEM MFG CO LTD) 26 November 1990
- DATABASE WPI Week 9102, Derwent Publications Ltd., London, GB; Class A82, AN 1991-012445 & JP 2 286 761 A (DAINICHISEIKA COLOR & CHEM MFG) 26 November 1990
- Chemical Abstracts, File Registry, RN 15396-00-6
- Chemical Abstracts, File Registry, RN 26115-72-0

## Description

### BACKGROUND OF THE INVENTION

### 1) Field of the Invention:

The present invention relates to coating compositions, and more specifically to water- and/or moisture-curing coating compositions capable of forming films excellent in surface properties. Particularly, this invention relates to fluoropolymer-based coating compositions.

### 2) Description of the Related Art:

JP-A-63030571 and JP-A-2286772 disclose moisture curable coating compositions comprising a fluor-containing polymer modified with a silane compound containing functional isocyanate groups.

JP-A-2286760 discloses a coating composition obtained by reacting a fluororesin with a modifying agent having at least one free isocyanate group.

JP-A-2286761 discloses a coating composition comprising a fluorine-containing resin modified with a silane coupling agent having at least one isocyanate group and with a reaction product between a fluorine compound and an organic polyisocyanate.

Coating compositions have conventionally been used widely to form a film on the surfaces of various structures, buildings, articles and the like so as to prevent corrosion and deterioration of such coated items and in addition, to provide them with excellent external appearance and surface functions.

Various coating compositions have been known as such protective and decorative ones. In recent years, fluoropolymer-based coating compositions have been increasingly finding wide-spread utility as coating compositions excellent in various durabilities such as weather resistance and antifouling property.

Fluoropolymers inherently have excellent weather resistance, heat resistance, water repellency, chemical resistance, electrical properties, etc. They, however, are not soluble in general paint solvents. Accordingly, they have been used exclusively for extremely special applications.

In order to overcome these drawbacks, fluoropolymers soluble in general paint solvents have been developed each by copolymerizing a fluorine-containing monomer with a general fluorine-free monomer. Such copolymerizable resins, however, contain fluorine-free monomer moieties, thereby unavoidably reducing inherent excellent essential properties of fluoropolymers such as antifouling property, abrasion resistance, non-tacky property and lubricating property.

In addition, the above fluoropolymers can be provided with various high durabilities when they are used as a two-pack type paint with a curing agent, because they contain functional groups, which have various reactivities, introduced therein. Most of the curing agents employed now, however, are melamines or isocyanates, which require a heating unit upon curing under heating. Such curing agents are accompanied by the danger of fires and also a problem of inferior curing. They also involve a problem of pot life even in the case of cold setting.

### SUMMARY OF THE INVENTION

An object of the present invention is therefore to provide a coating composition comprising a copolymer of a fluorine-containing monomer and a fluorine-free monomer, which copolymer is capable of forming films having the various inherent excellent properties of fluoropolymers in spite of the fact that it has good solubility in general paint solvent, and can be cured in one pack.

The expressions "lower alkyl group", "lower alkoxy group" and "lower alkylene" used below refer to groups containing 1 or 2 C-atoms.

The above object can be attained by the present invention to be specifically described below. In one aspect of the present invention, there is thus provided a coating composition comprising as a film-forming component a fluoropolymer modified with a silane-coupling agent containing one free isocyanate group and with a reaction product between a polysiloxane compound containing a reactive organic functional group and an organic polyisocyanate, said reaction product containing one free isocyanate group, characterized in that said silane-coupling agent is represented by the following formula: 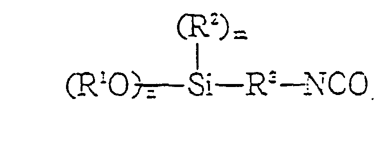 wherein R¹ is a lower alkyl group, R² is a lower alkyl or a lower alkoxy group, R³ is C₁₋₆ alkylene group, m stands for an integer of 1-3 and n is 3-m and the coating composition is curable by silanol condensation reaction using water as curing agent.

In another aspect of the present invention, there is also provided a coating composition comprising as a film-forming component a fluoropolymer modified with a silane-coupling agent containing one free isocyanate group and with a reaction product between a fluorine compound containing a reactive organic functional group and an organic polyisocyanate, said reaction product containing one free isocyanate group, characterized in that said silane-coupling agent is represented by the following formula: 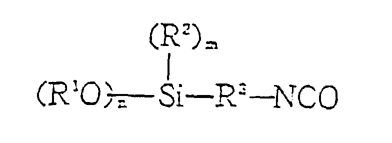 wherein R¹ is a lower alkyl group, R² is a lower alkyl or a lower alkoxy group, R³ is C₁₋₆ alkylene group, m stands for an integer of 1-3 and n is 3-m and the coating composition is curable by silanol condensation reaction using water as curing agent.

In the present invention, a coating composition can be provided by modifying a film-forming fluoropolymer with a specific silane coupling agent and with a reaction product between the silane coupling agent and another reactive compound. The coating composition according to the present invention can provide films capable of exhibiting excellent properties, which the fluoropolymer inherently has, such as antifouling property, abrasion resistance, non-tacky property, lubricating property and the like in spite of having good solubility in general paint solvents. Moreover, they can be cured in one pack without losing the above excellent properties.

### DETAILED DESCRIPTION OF THE INVENTION

Examples of the silane coupling agents containing one free isocyanate group and usable in the invention may include compounds as represented by the following formula: 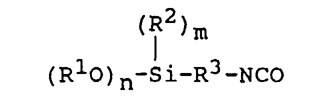 wherein R¹ is a lower alkyl group, R² is a lower alkyl or lower alkoxy group, R³ is C₁₋₆ alkylene group, m stands for an integer of 1-3 and n is 3 - m.

Preferred examples of the polysiloxane compounds containing a reactive organic functional group and usable in the invention may include the following various compounds:
(1) Amino-modified polysiloxane oils: 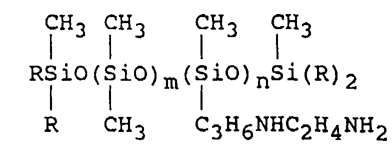 wherein m = 1-10, n = 2-10, and R = CH₃ or OCH₃. 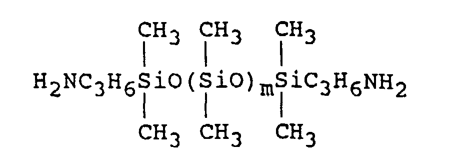 wherein m = 0-200. 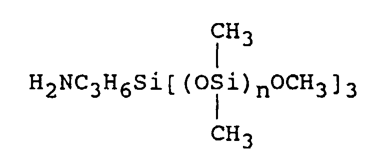 wherein n = 2-10. 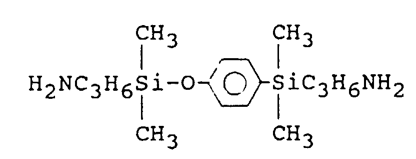 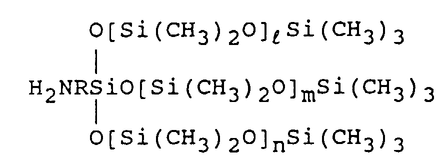 wherein branched sites = 2 or 3, R = lower alkylene, ℓ = 2-200, m = 2-200, and n = 2-200. 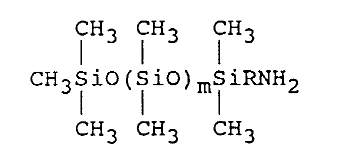 wherein m = 1-200, and R = lower alkylene.
(2) Epoxy-modified siloxane oils: 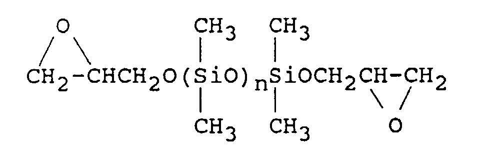 wherein n = 1-200. 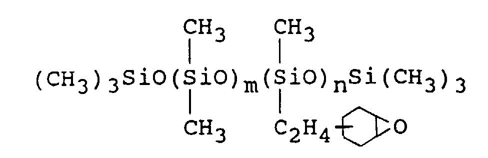 wherein m = 1-10, and n = 2-10. 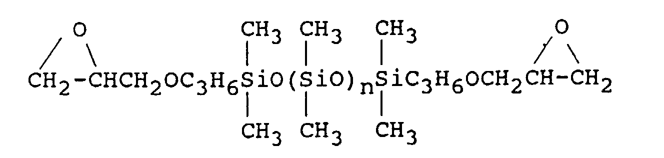 wherein n = 1-200. 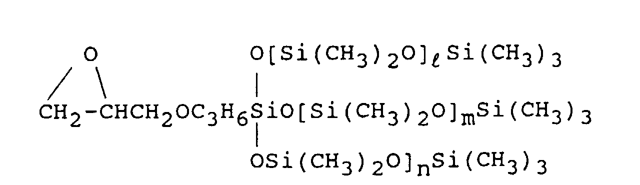 wherein branched sites = 2 or 3, ℓ = 2-200, m = 2-200, and n = 2-200. 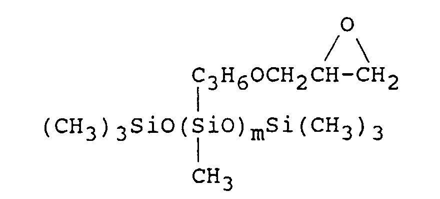 wherein m = 1-10. 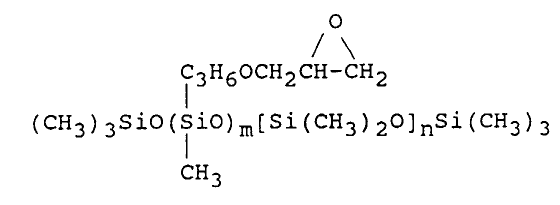 wherein m = 1-10, and n = 2-10.
   The above epoxy compounds can be used after introducing an active hydrogen atom in at least one end thereof by reacting them with a polyol, polyamide, polycarboxylic acid or the like.
(3) Alcohol-modified siloxane oils: 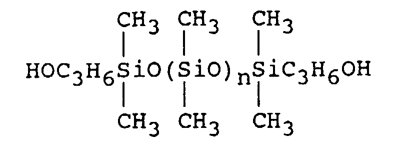 wherein n = 1-200. 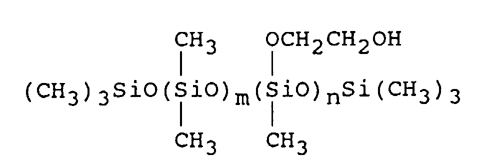 wherein m = 1-10 and n = 2-10. 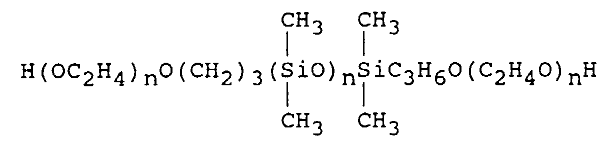 wherein n = 0-200. 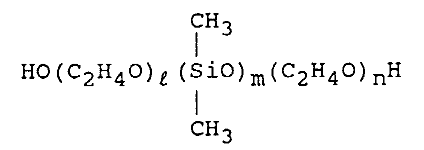 wherein ℓ = 1-10, m = 10-200, and n = 1-5. 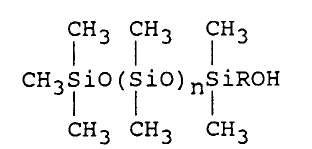 wherein n = 1-200, and R = lower alkylene. 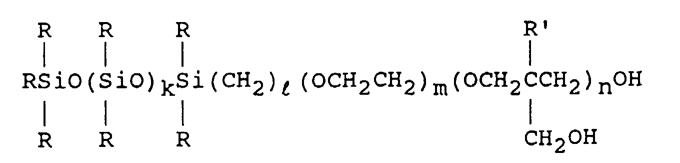 wherein R = lower alkyl, R' = hydrogen atom or alkyl group, k = 1-250, ℓ = 0-5, m = 0-50, and n = 1-3. 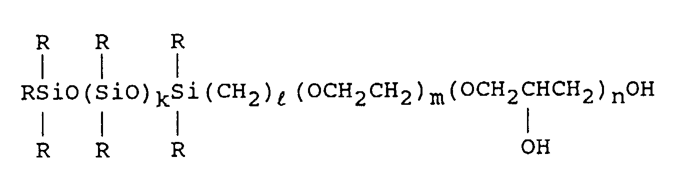 wherein R = lower alkyl, k = 1-250, ℓ = 0-5, m = 0-50, and n = 2-3.
(4) Mercapto-modified siloxane oils: 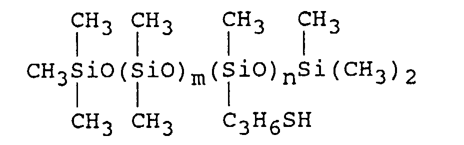 wherein m = 1-10, and n = 2-10. 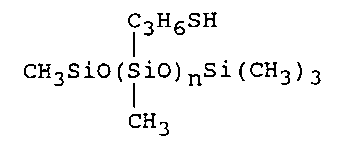 wherein n = 2-10. 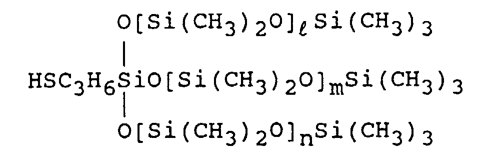 wherein branched sites: 2 or 3, ℓ = 2-200, m = 2-200, and n = 2-200. 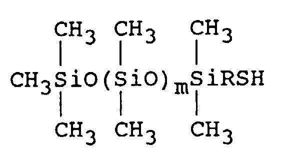 wherein n = 1-200, and R = lower alkylene.
(5) Carboxyl-modified siloxane oils: 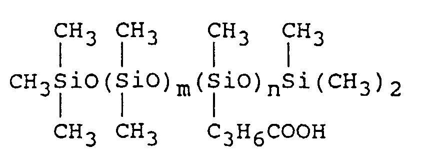 wherein m = 1-10, and n= 2-10. 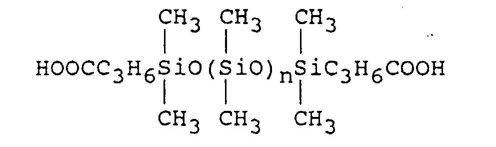 wherein n = 1-200. 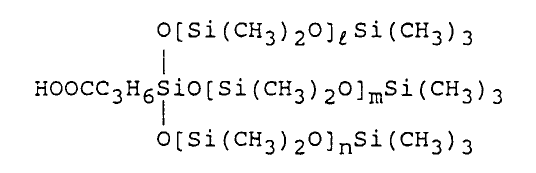 wherein branched sites: 2 or 3, ℓ = 2-200, m = 2-200, and n = 2-200. 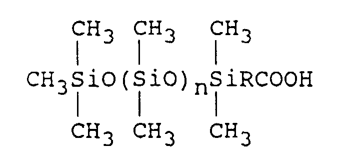 wherein n = 1-200, and R = lower alkylene.
   Preferred examples of the fluorine compounds containing one or more reactive organic functional groups useful in the present invention may include various compounds as represented by the following formulas: 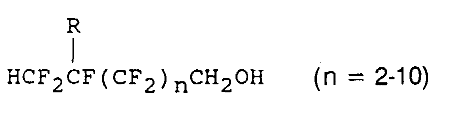 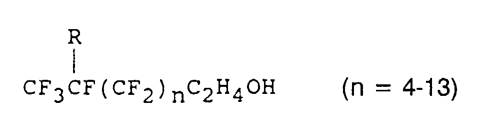 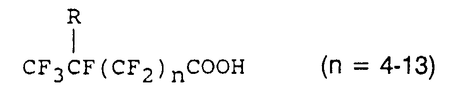 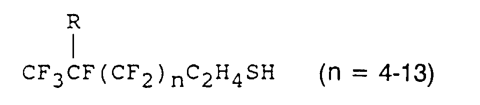 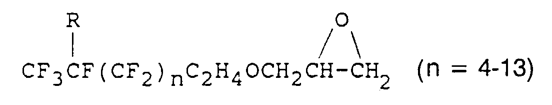 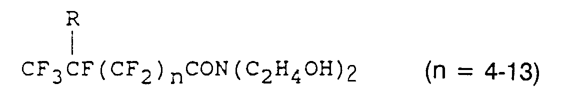 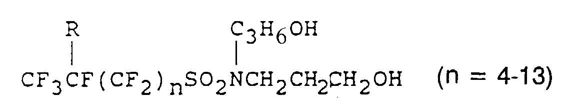 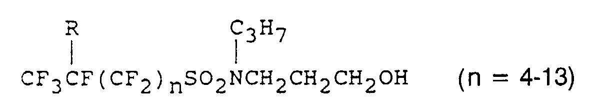 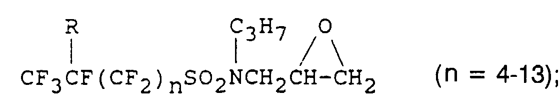 and

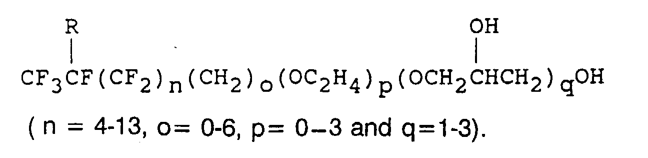

In all these Formulas R = F or CF₃.

It is to be noted that the above-listed polysiloxane compounds and fluorine compounds, each having one or more reactive organic functional groups, are merely illustrative of the compounds preferred in the invention and the invention is not necessarily limited to such exemplified compounds. The above-exemplified compounds and other known compounds which are commercially sold these days and are hence readily available on the market are all usable in the invention.

As the organic polyisocyanate to be reacted with the above polysiloxane compound or fluorine compound in the present invention, conventionally-known polyisocyanates are all usable. Preferred examples of polyisocyanates include:
Toluene-2,4-diisocyanate,
4-Methoxy-1,3-phenylene diisocyanate,
4-Isopropyl-1,3-phenylene diisocyanate,
4-Chloro-1,3-phenylene diisocyanate,
4-Butoxy-1,3-phenylene diisocyanate,
2,4-Diisocyanate-diphenylether,
Methylene diisocyanate,
4,4-Methylenebis(phenyl isocyanate)(MDI),
Durylene diisocyanate,
1,5-Naphthalene diisocyanate,
Benzidine diisocyanate,
o-Nitrobenzidine diisocyanate,
4,4-Diisocyanate dibenzyl,
1,4-Tetramethylene diisocyanate,
1,6- Hexamethylene diisocyanate,
1,10-Decamethylene diisocyanate,
1,4-Cyclohexylene diisocyanate,
Xylylene diisocyanate,
4,4-Methylenebis(cyclohexyl isocyanate), and
1,5-Tetrahydronaphthalene diisocyanate.

Adducts of the above-described organic polyisocyanates with other compounds, for example, those represented by the following formulas can also be mentioned, although the invention is not limited to the use of these examples.

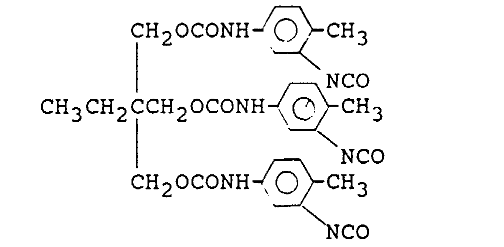

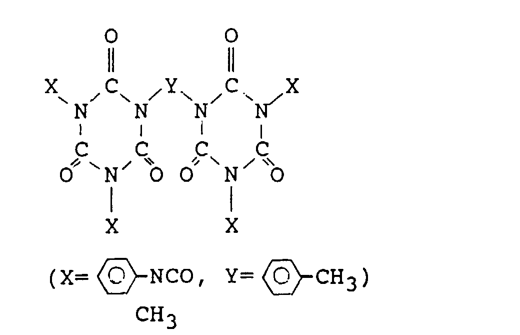

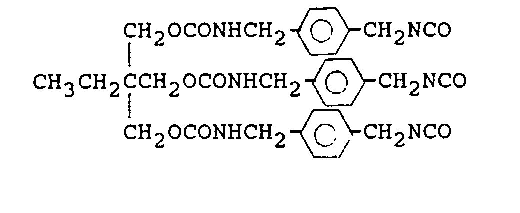

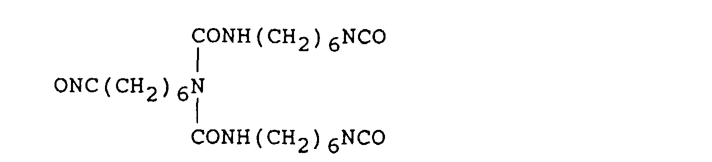

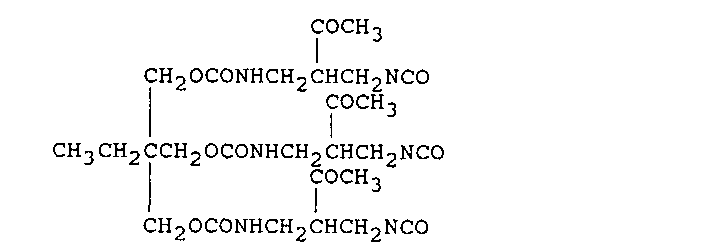

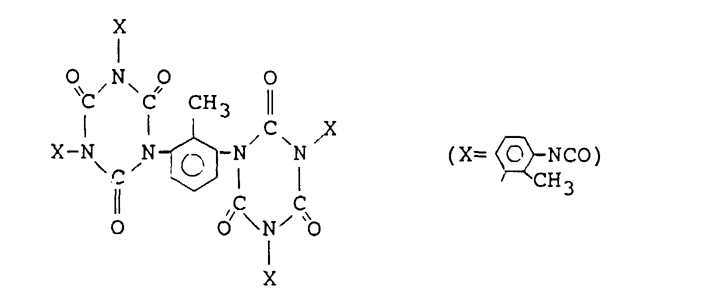

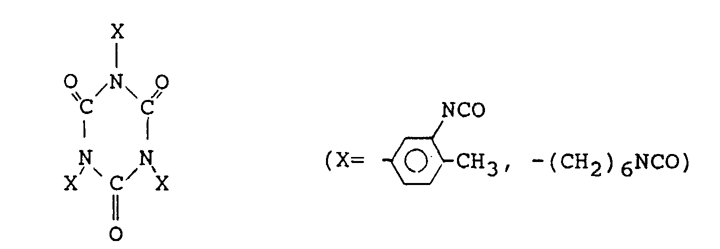

Urethane prepolymers and the like, which are obtained by reacting these organic polyisocyanates with low-molecular-weight polyols or polyamines into isocyanate-terminated polymers, can of course be used.

Reaction products useful in the present invention can each be obtained easily by reacting, in the presence or absence of an organic solvent and a catalyst at about 0-150°C, preferably 20-80°C for about 10 minutes to 3 hours, a polysiloxane compound or a fluorine compound, each containing one or more reactive organic functional groups as described above, with such an organic polyisocyanate as described above at such a functional group ratio that the number of the isocyanate groups is larger by one or more, preferably one or two, compared with that of the organic functional group or groups per molecule.

These reaction products can be prepared in a solvent or without any solvent. From the process standpoint, it is advantageous to prepare them in an organic solvent because the resulting solutions can be used, as they are, for the modification of a fluoropolymer.

Any organic solvents can be used in the preparation of such reaction products as long as they are inert to the respective reactants and the reaction product.

Preferred examples of such an organic solvent include methyl ethyl ketone, methyl-n-propyl ketone, methyl isobutyl ketone, diethyl ketone, methyl formate, ethyl formate, propyl formate, methyl acetate, ethyl acetate, butyl acetate and the like. It is also feasible to use acetone, cyclohexane, tetrahydrofuran, dioxane, methanol, ethanol, isopropyl alcohol, butanol, toluene, xylene, dimethylformamide, dimethylsulfoxide, perchloroethylene, trichloroethylene, methylcellosolve, butylcellosolve, cellosolve acetate and the like.

Solvents used in general coating compositions can also be used in the present invention. Solvents exemplified above can be mentioned, for example.

As the fluoropolymer used as a film-forming resin and modified with the above silane coupling agent and a specific reaction product, various fluoropolymers have been put on the market. Any fluoropolymers available from the market can be used as long as they contain a group reactive with an isocyanate group and, in addition, are soluble in the solvent.

Examples of suitable fluoropolymers include copolymers of fluorine-containing olefin monomers, such as tetrafluoroethylene and trifluorochloroethylene, and monomers containing one or more functional groups reactive with an isocyanate group, such as hydroxyl, carboxyl, amino and epoxy groups. Typical examples of these copolymerizable monomers include various alkyl vinyl ethers.

The coating composition of the present invention contains the above-described components as essential components. They are mixed at a ratio such that the solvent is contained to give a total solid content in a range of from 5 to 50 wt.%. It is preferable to mix the film-forming fluoropolymer in a proportion of about 5-30 wt.% per 100 parts by weight of the coating composition and also to mix the silane coupling agent and the reaction product in a proportion of 1-100 parts by weight, respectively, per 100 parts by weight of the fluoropolymer. The reaction of the silane coupling agent and the reaction product with the fluoropolymer can be conducted either before or after the preparation of the coating composition. No particular limitation is imposed in this respect.

Like other general coating compositions, the coating composition of the present invention can contain one or more of extender pigments, organic pigments, inorganic pigments, other film-forming resins, plasticizers, ultraviolet absorbers, antistatic agents, leveling agents, curing agents, catalysts and the like, as needed.

As other general film-forming resins which can be used in combination, conventionally-known various film-forming resins can be mentioned. They are all usable. Examples of them include vinyl chloride resins, vinylidene chloride resins, vinyl chloride/vinyl acetate/vinyl alcohol copolymer resins, alkyd resins, epoxy resins, acrylonitrile-butadiene resins, polyurethane resins, polyurea resins, nitrocellulose resins, polybutyral resins, polyester resins, melamine resins, urea resins, acrylic resins, polyamide resins and so on. Particularly preferred are resins which have groups reactive with isocyanate groups. These resins can be used either singly or in combination and also as solutions or dispersions in an organic solvent. The coating composition of the present invention can be prepared in exactly the same manner as any conventional preparation process, and no particular limitation is imposed on it.

When the coating composition of the present invention is brought into contact with moisture in the air, water, steam or the like, the silanol groups thereof cause a crosslinking reaction, leading to the curing of the composition.

Preferred examples of the catalyst used for the acceleration of the above silanol condensation include carboxylates such as alkyl titanates, tin octylate, and dibutyltin dilaurate; amine salts such as dibutylamin-2-ethylhexoate; and other acidic and basic catalysts. It is preferable to add the catalyst in a proportion of about 0.0001-5 wt.%. The coating compositions of the present invention can be cured by combined use, as a curing agent, of an isocyanate or a melamine.

The content of silanol groups after the modification is preferably within a range of from 0.1 wt.% to 60 wt.% and more preferably within a range of 0.1-30 wt.% in view of the clearness of the paint.

The coating composition of the present invention can be cured in one pack by bringing it into contact with the moisture in the air, water, steam or the like. In addition, it can provide a coating base comparable to that obtained by curing a fluoropolymer with a curing agent such as a melamine, an isocyanate or the like in the inherent properties of a fluoropolymer paint such as surface hardness, gloss, weatherability, solvent resistance and antifouling property,

The coating compositions of the present invention are useful, by themselves or in combination with a primer, not only for the coating of metallic materials such as steel plates, aluminium plates and aluminium sashes, but also for inorganic materials such as glass, cement and concrete, plastic materials such as fiber reinforced plastics (FRP), polyesters, polyethylene, polypropylene, polyamide, polyvinyl chloride resins and acrylic resins, and lumbers.

The present invention will hereinafter be described more specifically by the following examples and comparative examples, in which all designations of "part or parts" and "%" are on a weight basis unless otherwise specifically indicated.

### [Examples of First Embodiment]

### Referential Example 1 (Preparation of reaction product):

While a mixture of 15.1 parts of isophorone diisocyanate, 0.005 part of dibutyltin dilaurate and 70 parts of ethyl acetate was stirred thoroughly at 80°C, 150 parts of hydroxyl-terminated polydimethylsiloxane (molecular weight: 2,200) having the following structure: 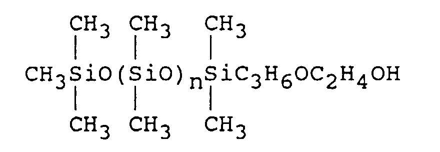 (wherein n is a value to give a molecular weight of 2,200)
were gradually added dropwise, followed by reaction.

After the reaction was completed, ethyl acetate was removed by evaporation, whereby 162 parts of the reaction product (I) were obtained in the form of a clear liquid .

In an infrared absorption spectrum of the reaction product (I), an absorption by free isocyanate groups was observed at 2,270 cm⁻¹ and an absorption band based on -SiO- groups was also observed at 1,090 cm⁻¹. As a result of a quantitative analysis of free isocyanate groups in the reaction product, their content was found to be 1.61% while the theoretical value is 1.73%.

Accordingly, the principal structure of the above reaction product is presumed to have the following formula:

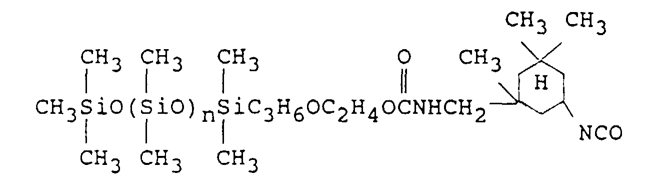

### Referential Example 2 (Preparation of reaction product) :

While a mixture of 121.4 parts of hydrogenated 4,4-methylene bis (phenyl isocyanate) (MDI), 0.006 part of butyltin dilaurate and 86 parts of ethyl acetate was stirred thoroughly at 80°C, 180 parts of hydroxyl-terminated polydimethylsiloxane (molecular weight: 2,200) having the same structure as that used in Referential Example I were gradually added dropwise, followed by reaction.

After the reaction was completed, ethyl acetate was removed by evaporation, whereby 194 parts of the reaction product (II) were obtained in the form of a clear liquid.

In an infrared absorption spectrum of the reaction product (II), an absorption by free isocyanate groups was observed at 2,270 cm⁻¹ and an absorption band based on -SiO- groups was also observed at 1,090 cm⁻¹. As a result of a quantitative analysis of free isocyanate groups in the reaction product, their content was found to be 1.58% while the theoretical value is 1.70%.

Accordingly, the principal structure of the above reaction product is presumed to have the following formula:

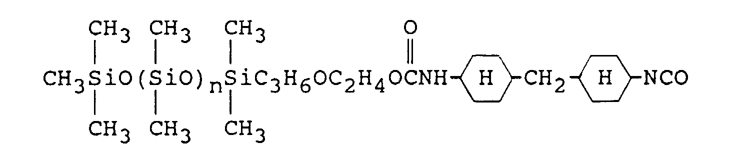

### Referential Example 3 (Modification of resin):

To 300 parts of a fluoroolefin-vinyl ether copolymer resin solution ("Lumiflon", trade mark; product of Asahi Glass Co., Ltd.; solid content: 50%; hydroxyl number: 24 mg-KOH/g), 20 parts of an isocyanate-containing silane coupling agent [(CH₂O)₃Si(CH₂)₃NCO; "KBM-9007", trade name; product of Shin-Etsu Chemical Co., Ltd.] and 3 parts of the reaction product (I) of Referential Example 1 were added and reacted at 80°C for 7 hours, whereby a solution of a fluoropolymer modified with the above reaction product was obtained.

In an infrared absorption spectrum of the resultant modified resin, an absorption band based on -SiO- groups was observed at 1,090 cm⁻¹ but no absorption by isocyanate groups was recognized at 2,270 cm⁻¹.

This appears to indicate that the coupling agent was grafted on the resin.

### Referential Example 4 (Modification of resin):

To 300 parts of a fluoroolefin-vinyl ether copolymer resin solution ("Lumiflon", trade mark; product of Asahi Glass Co., Ltd.; solid content: 60%; hydroxyl number: 32 mg-KOH/g), 24 parts of an isocyanate-containing silane coupling agent [(C₂H₅O)₃Si(CH₂)₃NCO; "KBE-9007", trade name; product of Shin-Etsu Chemical Co., Ltd.] and 4 parts of the reaction product (I) of Referential Example 1 were added and reacted at 80°C for 7 hours, whereby a solution of a fluoropolymer modified with the above reaction product was obtained.

In an infrared absorption spectrum of the resultant modified resin, an absorption band based on -SiO- groups was observed at 1,090 cm⁻¹ but no absorption by isocyanate groups was recognized at 2,270 cm⁻¹.

This appears to indicate that the coupling agent was grafted on the resin.

### Referential Example 5 (Modification of resin):

To 300 parts of a trifluorochloroethylene copolymer resin solution ("Selfulcoat", trade mark; product of Central Glass Co., Ltd.; solid content: 50%; hydroxyl number: 25 mg-KOH/g), 18 parts of an isocyanate-containing silane coupling agent [(CH₃O)₂CH₃Si(CH₂)₃NCO; "KBM-9207", trade name; product of Shin-Etsu Chemical Co., Ltd.] and 4 parts of the reaction product (I) of Referential Example 1 were added and reacted at 80°C for 7 hours, whereby a solution of a fluoropolymer modified with the above reaction product was obtained.

In an infrared absorption spectrum of the resultant modified resin, an absorption band based on -SiO- groups was observed at 1,090 cm⁻¹ but no absorption by isocyanate groups was recognized at 2,270 cm⁻¹.

This appears to indicate that the coupling agent was grafted on the resin.

### Examples 1-3 and Comparative Examples 1-3:

Based on a conventional method for the preparation of coating formulations, the modified resin solutions obtained in Referential Examples 3-5 were separately prepared into coating formulations Examples 1-3 in accordance with their corresponding compositions shown in Table 1. Tests on the physical properties of each formulation were conducted. The results are shown in Table 2.

In Comparative Examples 1-3, coating formulations were prepared respectively from the unmodified fluoropolymer solutions of Referential Examples 3-5 as film forming components and an isocyanate as a curing agent, respectively.

Each of the coating formulations thus obtained was coated on a zinc-coated steel plate (phosphated) to give a dry coat thickness of 25 µm, followed by drying at room temperature of 23°C and humidity of 46% for 10 days to form a film. Various physical properties of each film were measured by the following tests.

### Antifouling properties (*1):

Lipstick and Crayon: Wiped off by a dry cloth. Quick-drying felt pen:
1): Wiped off by a dry cloth.
2): Wiped off with a 50:50 (weight ratio) mixed solvent of petroleum benzine and ethanol.

| <Standard for judgment> | | |
|---|---|---|
| Resistance to lipstick | Resistance to crayon | Resistance to quick-drying felt pen |
| A: No stains were left. | ditto | ditto |
| B: Slight stains were left. | ditto | ditto |
| C: Substantial stains were left and they could not be removed easily. | ditto | ditto |
| D: Clear stains were left. | ditto | ditto |

### Surface properties (*2):

- Water repellency:: Contact angle (°)
- Falling angle (°):: Angle at which a water droplet began to slip down when a coated sample was progressively tilted. (For the measurement of contact angles and falling angles, a contact angle gauge manufactured by Kyowa Kaimen Kagaku Co., Ltd. was used.)
- Separation by cellophane tape:: JIS C 2107 was followed. Peeling force (g/m²) required to remove a cellophane tape (product of Nichiban Co., Ltd.) applied under a determined pressure was measured upon an elapsed time of 3 days at 25°C.

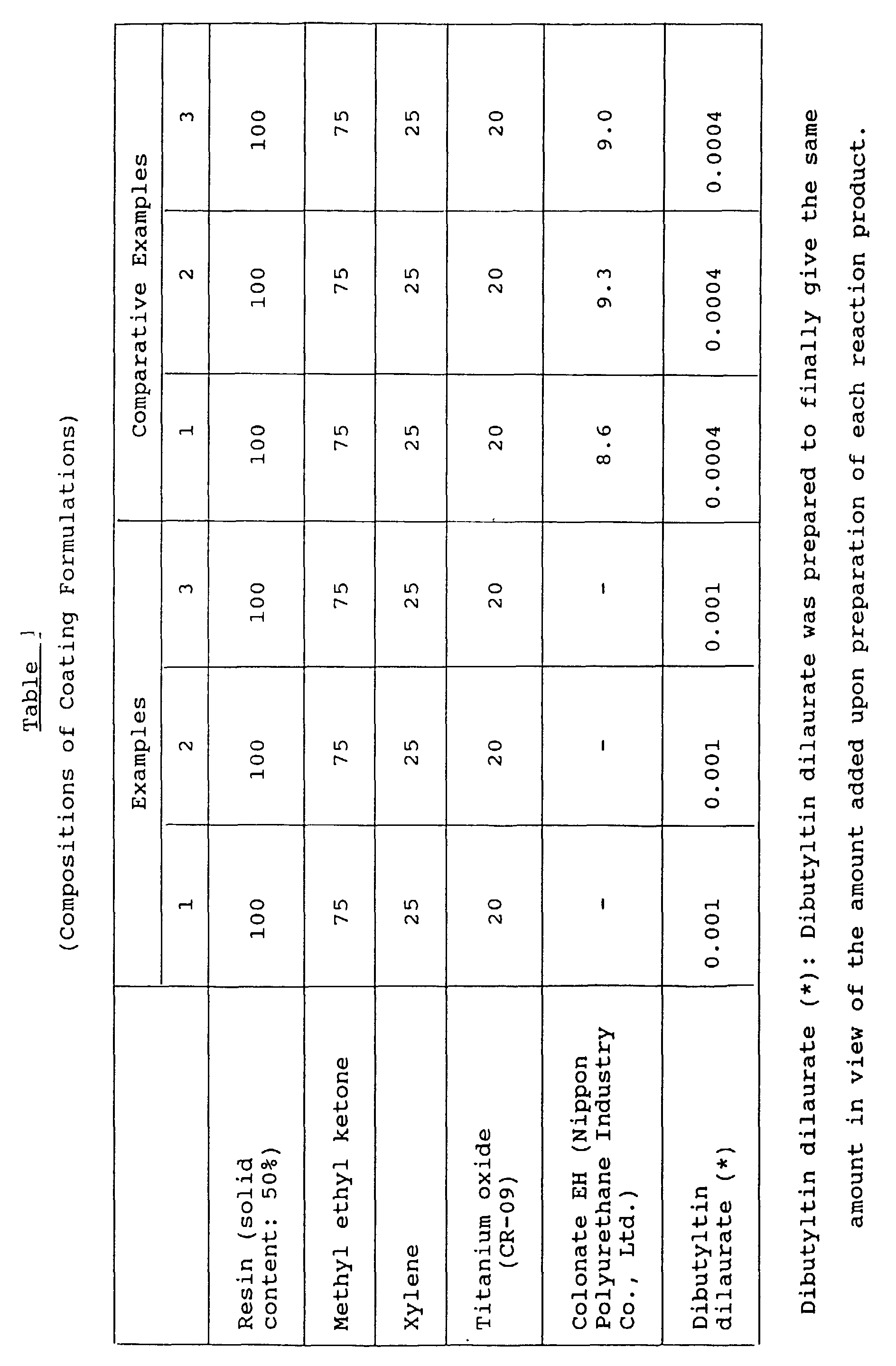

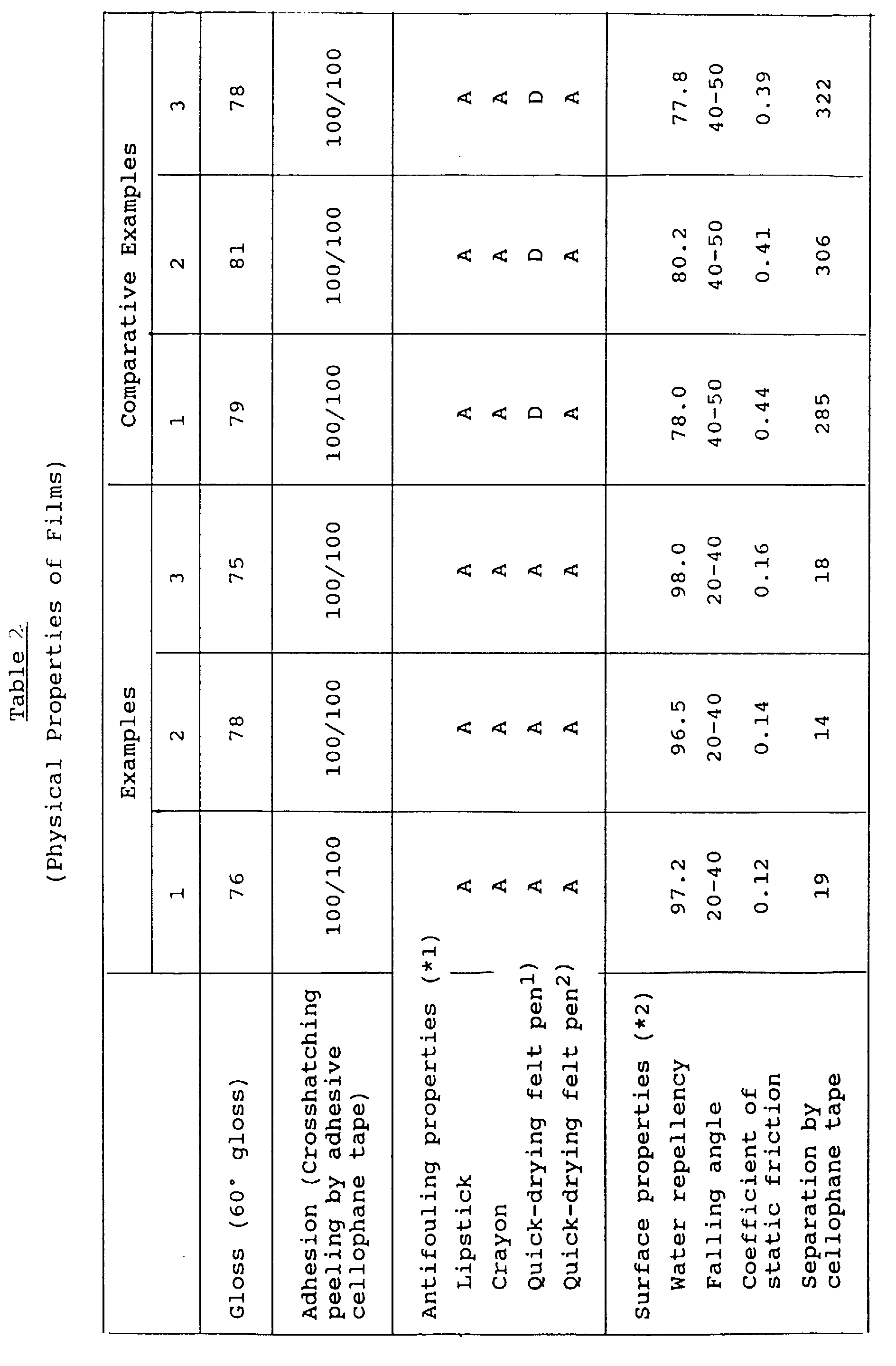

### [Examples of second Embodiment]

### Referential Example 1 (Preparation of reaction product):

While 71 parts of isophorone diisocyanate, 0.006 part of dibutyltin dilaurate and 221 parts of ethyl acetate were stirred thoroughly at 80°C, 150 parts of fluorine alcohol having the following structure:

CF₃(CF₂)₇CH₂CH₂OH

were gradually added dropwise and reacted.

After the reaction was completed, ethyl acetate was removed by evaporation, whereby 214 parts of a reaction product (I) were obtained in the form of a milky white wax.

In an infrared absorption spectrum of the reaction product (I), an absorption by free isocyanate groups was observed at 2,270 cm⁻¹ and an absorption band based on -CF₂- groups was also observed at 1,190 cm⁻¹. As a result of a quantitative analysis of free isocyanate groups in the reaction product, their content was found to be 5.80% while the theoretical value is 6.12%.

Accordingly, the principal structure of the above reaction product is presumed to have the following formula:

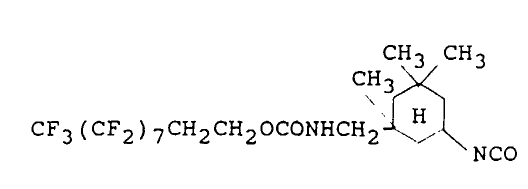

### Referential Example 2 (Preparation of reaction product):

While 198 parts of hydrogenated 4,4-methylene bis (phenyl isocyanate) (MDI), 0.009 part of dibutyltin dilaurate and 318 parts of ethyl acetate were stirred thoroughly at 80°C, 220 parts of fluorine alcohol having the following structure: 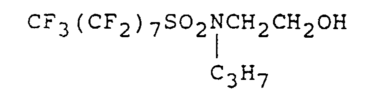 were gradually added dropwise and reacted.

After the reaction was completed, ethyl acetate was removed by evaporation, whereby 308 parts of a reaction product (II) were obtained in the form of a milky white wax.

In an infrared absorption spectrum of the reaction product (II), an absorption by free isocyanate groups was observed at 2,270 cm⁻¹ and an absorption band based on -CF₂- groups was also observed at 1,190 cm⁻¹. As a result of a quantitative analysis of free isocyanate groups in the reaction product, their content was found to be 4.52% while the theoretical value is 4.95%.

Accordingly, the principal structure of the above reaction product is presumed to have the following formula:

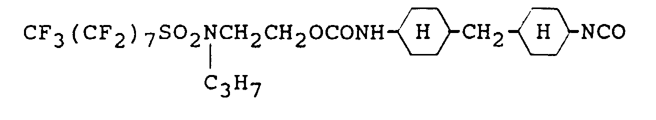

### Referential Example 3 (Preparation of reaction product):

While 62 parts of hexamethylene diisocyanate, 0.008 part of dibutyltin dilaurate and 272 parts of ethyl acetate were stirred thoroughly at 80°C, 210 parts of fluorine alcohol having the following structure: 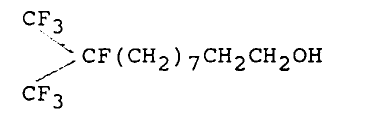 were gradually added dropwise and reacted.

After the reaction was completed, ethyl acetate was removed by evaporation, whereby 264 parts of a reaction product (III) were obtained in the form of a milky white wax.

In an infrared absorption spectrum of the reaction product (III), an absorption by free isocyanate groups was observed at 2,270 cm⁻¹ and an absorption band based on -CF₂- groups was also observed at 1,190 cm⁻¹. As a result of a quantitative analysis of free isocyanate groups in the reaction product, their content was found to be 5.21% while the theoretical value is 5.73%.

Accordingly, the principal structure of the above reaction product is presumed to have the following formula:

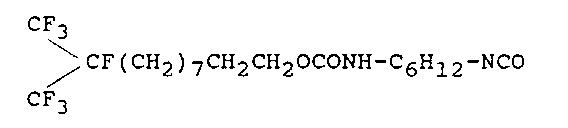

### Referential Example 4 (Modification of resin):

To 300 parts of a fluoroolefin-vinyl ether copolymer resin solution ("Lumiflon", trade mark; product of Asahi Glass Co., Ltd.; solid content: 50%; hydroxyl number: 24 mg-KOH/g), 18 parts of an isocyanate-containing silane coupling agent [(CH₃O)₃Si(CH₂)₃NCO; "KBM-9007) trade name; product of Shin-Etsu Chemical Co., Ltd.] and 4 parts of the reaction product (I) of Referential Example 1 were added and reacted at 80°C for 7 hours, whereby a solution of a fluoropolymer modified with the above reaction product was obtained.

In an infrared absorption spectrum of the resultant modified resin, no absorption by isocyanate groups was recognized at 2,270 cm⁻¹.

This appears to indicate that the coupling agent was grafted on the resin.

### Referential Example 5 (Modification of resin):

To 300 parts of a fluoroolefin-vinyl ether copolymer resin solution ("Lumiflon", trade mark; product of Asahi Glass Co., Ltd.; solid content: 60%; hydroxyl number: 32 mg-KOH/g), 22 parts of an isocyanate-containing silane coupling agent [(C₂H₅O)₃Si(CH₂)₃NCO; "KBE-9007", trade name; product of Shin-Etsu Chemical Co., Ltd.] and 4 parts of the reaction product (II) of Referential Example 2 were added and reacted at 80°C for 7 hours, whereby a solution of a fluoropolymer modified with the above reaction product was obtained.

In an infrared absorption spectrum of the resultant modified resin, no absorption by isocyanate groups was recognized at 2,270 cm⁻¹.

This appears to indicate that the coupling agent was grafted on the resin.

### Referential Example 6 (Modification of resin):

To 300 parts of a trifluorochloroethylene copolymer resin solution ("Selfulcoat", trade mark; product of Central Glass Co., Ltd.; solid content: 50%; hydroxyl number: 25 mg-KOH/g), 17 parts of an isocyanate-containing silane coupling agent [(CH₃O)₂CH₃Si(CH₂)₃NCO; "KBM-9207", trade name; product of Shin-Etsu Chemical Co., Ltd.] and 3 parts of the reaction product (III) of Referential Example 3 were added and reacted at 80°C for 7 hours, whereby a solution of a fluoropolymer modified with the above reaction product was obtained.

In an infrared absorption spectrum of the resultant modified resin, no absorption by isocyanate groups was recognized at 2,270 cm⁻¹.

This appears to indicate that the coupling agent was grafted on the resin.

### Examples 1-3 and Comparative Examples 1-3:

Based on a conventional method for the preparation of coating formulations, the modified fluoropolymer solutions obtained in Referential Examples 4-6 were separately prepared into coating formulations of Examples 1-3 in accordance with their corresponding compositions shown in Table 1. Various properties of the coating formulations thus obtained were tested. The results are shown in Table 2.

The coating compositions of Comparative Examples 1-3 were prepared respectively from the unmodified fluoropolymer solutions used in Referential Examples 4-6 as film-forming resins and an isocyanate as a curing agent.

Each of the coating formulations thus obtained was coated on a zinc-coated steel plate (phosphated) to give a dry coat thickness of 25 µm, followed by drying at room temperature of 23°C and humidity of 46% for 10 days to form a film. Various properties of each film were measured.

### Antifouling properties (*1):

Lipstick and Crayon: Wiped off by a dry cloth. Quick-drying felt pen:
1): Wiped off by a dry cloth.
2): Wiped off with a 50:50 mixed solvent of petroleum benzine/ethanol.

| <Standard for judgment> | | |
|---|---|---|
| Resistance to lipstick | Resistance to crayon | Resistance to quick-drying hick-drying |
| A: No stains were left. | ditto | ditto |
| B: Slight stains were left. | ditto | ditto |
| C: Substantial stains were left and they could not be removed easily. | ditto | ditto |
| D: Clear stains were left. | ditto | ditto |

### Surface properties (*2) :

- Water repellency:: Contact angle (°)
- Falling angle (°):: Angle at which a water droplet began to slip down when a coated sample was progressively tilted. (For the measurement of contact angles and falling angles, a contact angle gauge manufactured by Kyowa Kaimen Kagaku Co., Ltd. was used.)
- Separation by cellophane tape:: JIS C 2107 was followed. Peeling force (g/m²) required to remove a cellophane tape (product of Nichiban Co., Ltd.) applied under a determined pressure was measured upon an elapsed time of 3 days at 25°C.

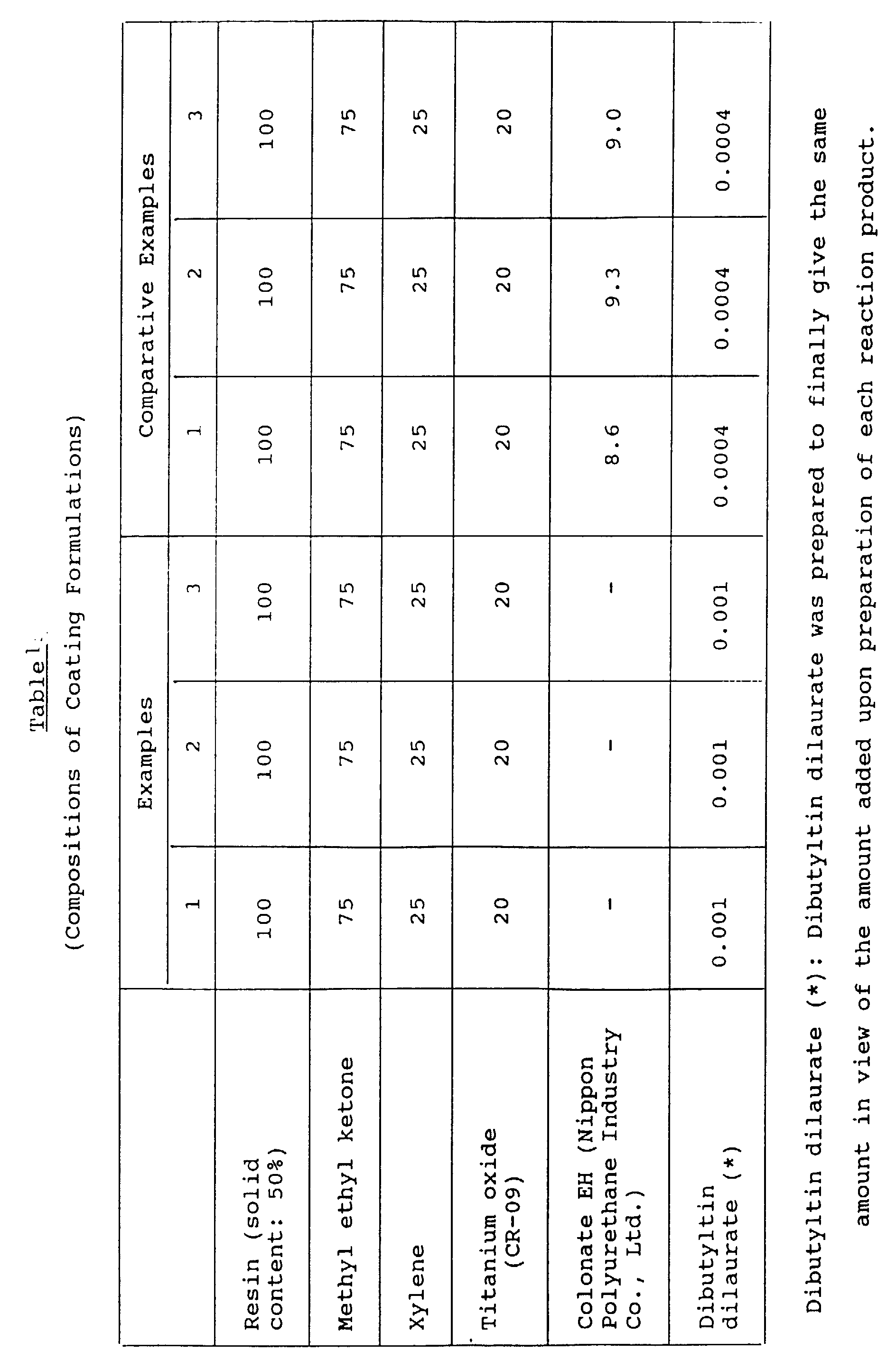

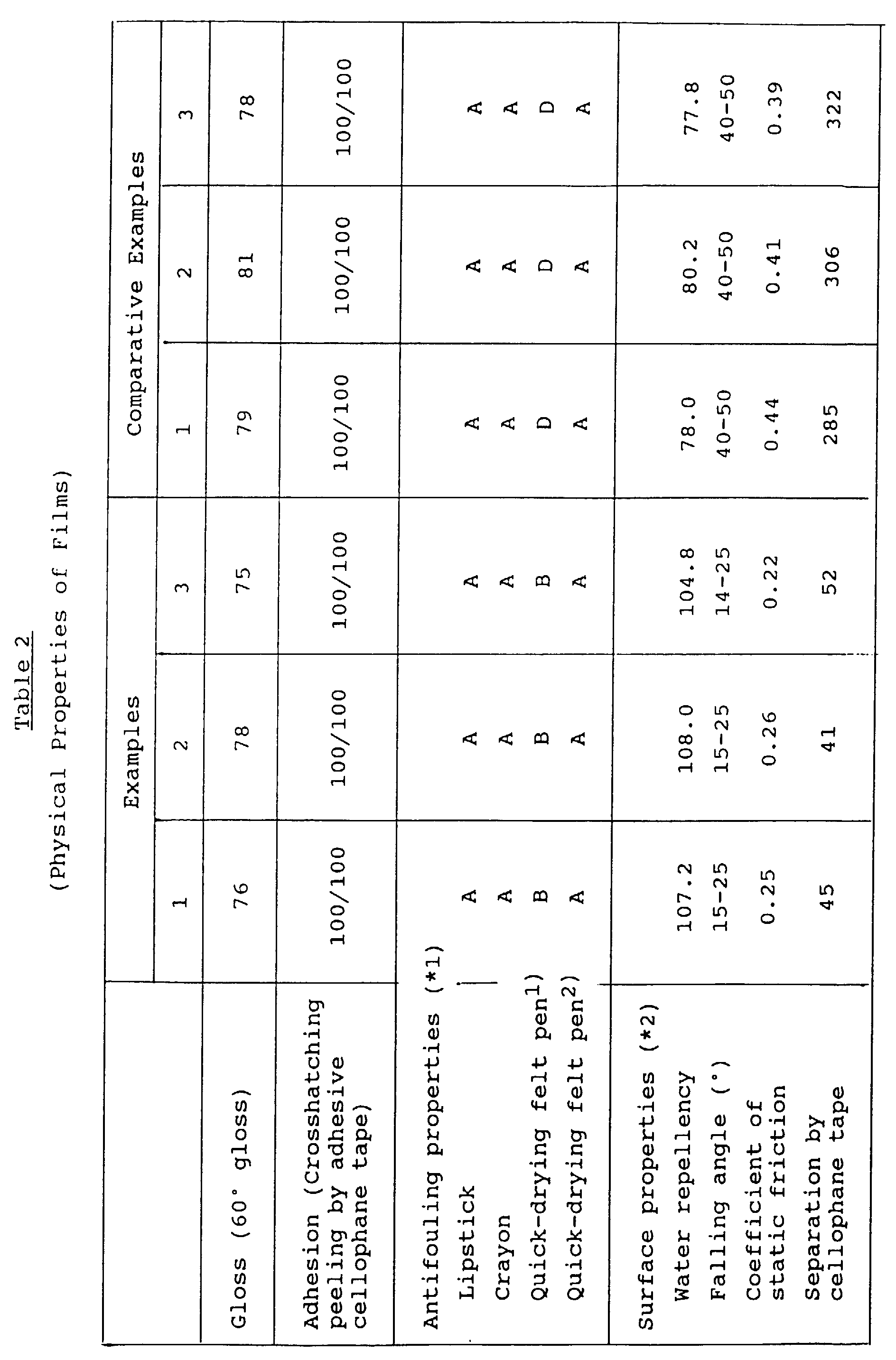

## Claims

1. A coating composition comprising as a film-forming component a fluoropolymer modified with a silane- coupling agent containing
one free isocyanate group and with a reaction product between a polysiloxane compound containing a reactive organic functional group and an organic polyisocyanate, said reaction product containing one free isocyanate group, characterized in that said silane-coupling agent is represented by the following formula: 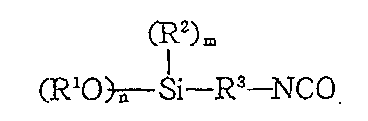 wherin R¹ is a methyl or ethyl group, R² is a methyl or ethyl or a lower methoxy or ethoxy group, R³ is C₁₋₆ alkylene group, m stands for an integer of 1-3 and n is 3-m and the coating composition is curable by silanol condensation reaction using water as curing agent.

2. A coating composition comprising as a film-forming component a fluoropolymer modified with a silane- coupling agent containing
one free isocyanate group and with a reraction product between a fluorine compound containing a reactive organic functional group and an organic polyisocyanate, said reaction product containing one
free isocyanate group, characterized in that said silane- coupling agent is represented by the following formula: 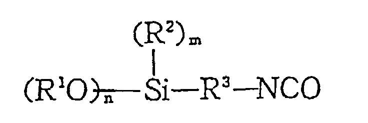 wherin R¹ is a methyl or ethyl group, R² is a methyl or ethyl or a methoxy or ethoxy group, R³ is C₁₋₆ alkylene group, m stands for an integer of 1-3 and n is 3-m and the coating composition is curable by silanol condensation reaction using water as curing agent.

## Patentansprüche

1. Eine Beschichtungszusammensetzung umfassend als filmbildende Komponente ein Fluorpolymer, das mit einem eine freie Isocyanatgruppe enthaltenden Silanhaftmittel und mit einem Reaktionsprodukt aus einer Polysiloxanverbindung, die eine reaktive organische funktionelle Gruppe enthält, und einem organischen Polyisocyanat modifiziert ist, wobei das Reaktionsprodukt eine freie Isocyanatgruppe enthält, dadurch gekennzeichnet, dass das Silanhaftmittel durch die folgende Formel beschrieben wird: 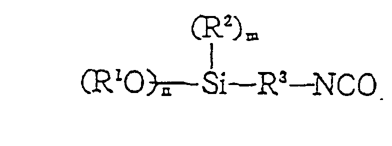 wobei R¹ eine Methyl- oder Ethylgruppe, R² eine Methyl- oder Ethylgruppe oder eine Methoxy- oder Ethoxygruppe, R³ eine C₁₋₆ Alkylengruppe ist, m steht für eine ganze Zahl von 1-3 und n ist 3-m, und wobei die Beschichtungszusammensetzung durch eine Silanolkondensationsreaktion unter Verwendung von Wasser als Härter härtbar ist.

2. Eine Beschichtungszusammensetzung umfassend als filmbildende Komponente ein Fluorpolymer, das mit einem eine freie Isocyanatgruppe enthaltenden Silanhaftmittel und mit einem Reaktionsprodukt aus einer Fluorverbindung, die eine reaktive organische funktionelle Gruppe enthält, und einem organischen Polyisocyanat modifiziert ist, wobei das Reaktionsprodukt eine freie Isocyanatgruppe enthält, dadurch gekennzeichnet, dass das Silanhaftmittel durch die folgende Formel beschrieben wird: 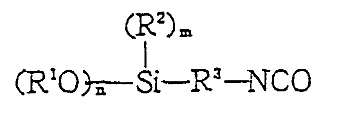 wobei R¹ eine Methyl- oder Ethylgruppe, R² eine Methyl- oder Ethylgruppe oder eine Methoxy- oder Ethoxygruppe, R³ eine C₁₋₆ Alkylengruppe ist, m steht für eine ganze Zahl von 1-3 und n ist 3-m, und wobei die Beschichtungszusammensetzung durch eine Silanolkondensationsreaktion unter Verwendung von Wasser als Härter härtbar ist.

## Revendications

1. Composition de revêtement comprenant en tant que composé filmogène un fluoropolymère modifié par un agent de couplage du type silane contenant
un groupe isocyanate libre et par un produit de réaction entre un composé polysiloxane contenant un groupe fonctionnel réactif organique et un polyisocyanate organique, le dit produit de réaction contenant un groupe isocyanate libre, caractérisée en ce que le dit agent de couplage est représenté par la formule suivante : 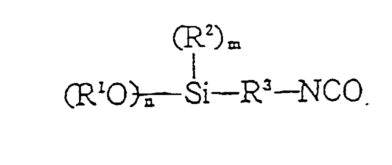 dans laquelle R¹ est un groupe méthyle ou éthyle, R² est un groupe méthyle ou éthyle ou méthoxy ou éthoxy, R³ est un groupe alkylène en C₁₋₆, m est un nombre entier de 1-3 et n est 3-m et la composition de revêtement est durcissable par la réaction de condensation du silanol utilisant l'eau comme agent durcisseur.

2. Composition de revêtement comprenant en tant que composant filmogène un fluoropolymère modifié par un agent de couplage du type silane contenant
un groupe isocyanate libre et par un produit de réaction entre un composé fluoré contenant un groupe fonctionnel organique réactif et un polyisocyanate organique, le dit produit de réaction contenant
un groupe isocyanate libre, caractérisée en ce que le dit agent de couplage du type silane est représenté par la formule suivante : 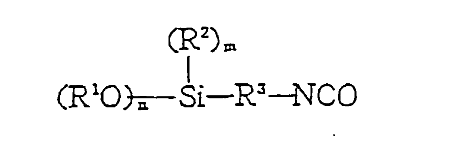 dans laquelle R¹ est un groupe méthyle ou éthyle, R² est un groupe méthyle ou éthyle ou méthoxy ou éthoxy, R³ est un groupe alkylène en C_{1-6,} m est un nombre entier de 1-3 et n est 3-m et la composition de revêtement est durcissable par la réaction de condensation du silanol utilisant l'eau comme agent durcissant.
